# EUROPÄISCHE PATENTANMELDUNG

(11) **EP 4 425 588 A1**
(43) Veröffentlichungstag der Anmeldung: **04.09.2024**
(21) Anmeldenummer: 23159312.0
(22) Anmeldetag: 01.03.2023
(51) Int. Cl.: H01M 4/04, H01M 4/13, H01M 4/139, H01M 4/66, H01M 10/052, H01M 10/054, H01M 10/0585, H01M 10/0587, H01M 50/536, H01M 4/02

(54) **BANDFÖRMIGE ELEKTRODE FÜR EIN ELEKTROCHEMISCHES ENERGIESPEICHERELEMENT**

(71) Anmelder: VARTA Microbattery GmbH, 73479 Ellwangen Jagst (DE)
(72) Erfinder: Schebesta, Sebastian, 73479 Ellwangen (DE)
(74) Vertreter: Ostertag & Partner Patentanwälte mbB

(57) **Zusammenfassung**

Es wird eine bandförmige Elektrode (100) mit einem bandförmigen Stromkollektor (10) und einer ein- oder beidseitigen Beschichtung (11) mit Elektrodenmaterial vorgeschlagen. Der bandförmige Stromkollektor (10) umfasst einen ersten und einen zweiten Längsrand. Der erste Längsrand ist als Kontaktrand (101) ausgebildet und dient zur elektrischen Kontaktierung der Elektrode, wobei der erste Längsrand nicht mit dem Elektrodenmaterial beschichtet ist. Der zweite Längsrand ist als Stützrand (102) ausgebildet und ist ebenfalls nicht mit dem Elektrodenmaterial beschichtet. Die Breite des Stützrandes (102) beträgt maximal 99 %, vorzugsweise maximal 50 %, der Breite des Kontaktrandes (101).

## Beschreibung

Die vorliegende Erfindung betrifft eine bandförmige Elektrode mit einem bandförmigen Stromkollektor und einer ein- oder beidseitigen Beschichtung mit Elektrodenmaterial. Weiterhin betrifft die Erfindung ein Verfahren zur Herstellung einer solchen bandförmigen Elektrode, ein elektrochemisches Energiespeicherelement und ein Verfahren zur Herstellung eines elektrochemischen Energiespeicherelements.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive Elektrode und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung des elektrochemischen Energiespeicherelements reversibel ist, also die Möglichkeit besteht, die bei der Entladung erfolgte Umwandlung von chemischer Energie in elektrische Energie wieder umzukehren und die Zelle bzw. das Element wieder zu laden, spricht man von einem sekundären Energiespeicherelement. Die bei sekundären Elementen allgemein übliche Bezeichnung der negativen Elektrode als Anode und die Bezeichnung der positiven Elektrode als Kathode bezieht sich auf die Entladefunktion des elektrochemischen Energiespeicherelements.

Vorliegend wird unter dem Begriff "elektrochemisches Energiespeicherelement" nicht nur eine einzelne elektrochemische Zelle verstanden, sondern auch eine Batterie, die aus einer Mehrzahl einzelner elektrochemischer Zellen aufgebaut ist.

In der WO 2017/215900 A1 sind Energiespeicherelemente in Form von zylindrischen Rundzellen beschrieben, bei denen ein Verbundkörper aus bandförmigen Elektroden gebildet ist und in Form eines Wickels vorliegt. Die Elektroden weisen jeweils mit Elektrodenmaterial beladene Stromkollektoren auf. Entgegengesetzt gepolte Elektroden sind innerhalb des Verbundkörpers versetzt zueinander angeordnet, so dass Längsränder der Stromkollektoren der positiven Elektroden an einer Stirnseite und Längsränder der Stromkollektoren der negativen Elektroden an einer zweiten Stirnseite aus dem Wickel austreten. Zur elektrischen Kontaktierung der Stromkollektoren weist die Zelle Kontaktplatten auf, die auf den Stirnseiten des Wickels aufsitzen und mit den herausstehenden Längsrändern der Stromkollektoren durch Verschweißung verbunden sind. Dadurch ist es möglich, die Stromkollektoren und damit auch die dazugehörigen Elektroden über ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden. Auch Wärme kann besser aus dem Wickel abgeführt werden.

Um bei solchen oder ähnlich aufgebauten Energiespeicherelementen eine gute Anbindung der Längsränder der Stromkollektoren an die Kontaktplatte oder herkömmliche Stromableiter zu gewährleisten, ist es zweckmäßig, zur Bildung des Elektroden-Separator-Verbunds bandförmige Elektroden zu verwenden, die einen Längsrand, nämlich den zu kontaktierenden Längsrand (Kontaktrand) aufweisen, der beidseitig frei von Elektrodenmaterial ist. Da zur Kontaktierung nur dieser Längsrand benötigt wird, ist der zweite Längsrand der bandförmigen Elektroden in der Regel zweckmäßigerweise mit Elektrodenmaterial beschichtet.

Es ist bekannt, bandförmige Elektroden in einem Beschichtungsprozess herzustellen, bei dem pastöse Elektrodenmaterialien auf flächige Stromkollektoren aufgetragen werden. Oft handelt es sich bei den Stromkollektoren um bandförmige Metallfolien (Stromkollektorbänder). Produktionstechnisch wird dies meist realisiert, indem die Kollektoren als quasi endlose Bänder (kurz: Kollektorbänder) bereitgestellt werden, die eine Beschichtungseinrichtung durchlaufen, in der sie mittels eines Rakels oder mittels einer Düse mit der Elektrodenpaste beschichtet werden. Der Auftrag der Elektrodenmaterialien erfolgt beispielsweise mittels einer Schlitzdüse, wie sie in der EP 3608028 B1 beschrieben ist. Oftmals wird in einem Tandem-Prozess zunächst eine Seite einer bandförmigen Metallfolie mit einem Streifen aus dem Elektrodenmaterial beschichtet. Das einseitig beschichtete Band wird anschließend getrocknet und aufgewickelt. In einem späteren, weiteren Schritt wird die zweite Seite der bandförmigen Metallfolie mit dem gleichen Elektrodenmaterial, wieder in Form eines Streifens, beschichtet und getrocknet.

Es ist weiterhin bekannt, zur Herstellung von Elektrodenbändern mit einem Kontaktrand mehrere parallele Streifen aus einem Elektrodenmaterial auf eine bandförmige Metallfolie aufzubringen. Die beschichtete Metallfolie wird anschließend zwischen den Streifen in Längsrichtung zertrennt, beispielsweise mittels eines Lasers, in vielen Fällen bevorzugt derart, dass genau ein unbeschichteter Längsrand zur Kontaktierung der erwähnten Kontaktplatte verbleibt. Auf diese Weise können gleichzeitig mehrere bandförmige Elektroden hergestellt werden, die jeweils den von Elektrodenmaterial freien Längsrand aufweisen, der als Kontaktrand zur späteren Kontaktierung der Elektrode in dem elektrochemischen Energiespeicherelement zur Verfügung stehen kann.

Zur verbesserten mechanischen und elektrischen Kontaktierung der Elektrodenbestandteile, zur Erhöhung der Energiedichte und zur Verbesserung der mechanischen Stabilität der Elektrodenmaterialbeschichtung werden die beschichteten Stromkollektorbänder nach der Beschichtung und gegebenenfalls einer Trocknung in aller Regel einer sogenannten Kalandrierung unterzogen. Als Kalandrierung wird dabei das Beaufschlagen des mit dem Elektrodenmaterial beschichteten Stromkollektorbandes mit Druck bezeichnet. In der Regel kommen hierbei zwei Walzen (Kalanderwalzen) zum Einsatz, die einen Spalt ausbilden, der kleiner als die Ausgangsdicke des beschichteten Stromkollektorbandes ist. Durch diesen Spalt wird das beschichtete Stromkollektorband hindurchgeführt und kompaktiert. Dabei können auch gezielt definierte Porositäten der Beschichtung eingestellt werden.

Die Kalanderwalzen üben beim Kalandrieren in der Regel einen derart starken Druck auf das beschichtete Stromkollektorband aus, dass nicht nur das Elektrodenmaterial verdichtet sondern auch das Stromkollektorband stauchend verformt und insbesondere in Längsrichtung verlängert wird. Problematisch dabei ist, dass diese Verformung nur in mit Elektrodenmaterial beschichteten Bereichen des Kollektorbandes auftritt, da nur auf diese Bereiche der Druck der Kalanderwalzen übertragen wird. Nicht von Elektrodenmaterial bedeckte Bereiche des Stromkollektorbandes können die Kalanderwalzen unverformt passieren, da ihre Dicke die Breite des Spaltes zwischen den Walzen unterschreitet.

Dies ist insoweit problematisch, als sich die aus dem Kalander austretende bandförmige Elektrode zum Abbau von aufgrund der Teilverformung auftretenden Spannungen wölben und verziehen kann. Insbesondere im Bereich eines nicht mit Elektrodenmaterial beschichteten Längsrands kann es zu Verwerfungen und Wellenbildung kommen. Diese Verformungen können bei der Weiterverarbeitung der Elektrodenbänder, beispielsweise bei der Herstellung von Elektrodenwickeln, große Probleme verursachen. In der Regel sind zusätzliche technische Aufwendungen nötig, um derartig verformte Bänder maschinell zu verarbeiten.

Es existieren bereits verschiedene Ansätze, um bei Kalandriervorgängen auftretende Verformungen auszugleichen. Aus der JP 2014220113 A ist es bekannt, vor und nach der Verdichtung jeweils eine Vorrichtung zur Dehnung von Freibereichen vorzusehen. Aus der DE 102011088824 A1 ist es bekannt, unbeschichtete Bereiche von Stromkollektorbändern durch einen Umformprozess an den beschichteten Bereich anzupassen. Aus der EP 2637238 B1 ist die Verwendung von Wärme zur Behandlung unbeschichteter Bereiche bekannt. Die EP 4016664 A1 schlägt zur Lösung des Problems vor, eine selektive plastische Dehnung der unbeschichteten Bereiche mit Hilfe einer Fördereinrichtung und einer Bremseinrichtung im Zuge des Kalandrierprozesses vorzugnehmen.

### AUFGABE UND LÖSUNG

Diese Ansätze aus dem Stand der Technik führten bislang nicht zu einer befriedigenden Lösung des Problems, da sie verhältnismäßig aufwendig sind.

Die Erfindung stellt sich demgegenüber die Aufgabe, eine vereinfachte technische Lösung bereitzustellen, mit der eine Verformung der Elektrode mit einfachen Maßnahmen verhindert oder zumindest maßgeblich reduziert werden kann.

Diese Aufgabe wird durch eine bandförmige Elektrode gelöst, die Gegenstand des Anspruchs 1 ist. Weiterhin wird diese Aufgabe durch ein Verfahren zur Herstellung einer solchen bandförmigen Elektrode gelöst, wie es sich aus dem Anspruch 5 ergibt. Bevorzugte Ausgestaltungen der bandförmigen Elektrode sowie des Herstellungsverfahrens ergeben sich aus den von diesen Ansprüchen abhängigen Ansprüchen. Von der Erfindung umfasst sind weiterhin auch ein elektrochemisches Energiespeicherelement und ein Verfahren zu dessen Herstellung gemäß den weiteren Ansprüchen.

Die erfindungsgemäße bandförmige Elektrode ist als Komponente eines elektrochemischen Energiespeicherelements vorgesehen. Die bandförmige Elektrode umfasst einen bandförmigen Stromkollektor und eine ein- oder beidseitige Beschichtung mit Elektrodenmaterial. Vorzugsweise ist die Elektrode beidseitig mit dem Elektrodenmaterial beschichtet. Weiterhin zeichnet sich die bandförmige Elektrode durch die folgenden Merkmale aus:
a. Der bandförmige Stromkollektor umfasst einen ersten und einen zweiten Längsrand.
b. Der erste Längsrand ist als Kontaktrand ausgebildet,
   - wobei der erste Längsrand zur elektrischen Kontaktierung der Elektrode innerhalb des herzustellenden elektrochemischen Energiespeicherelements dient und
   - wobei der erste Längsrand nicht mit dem Elektrodenmaterial beschichtet ist. Vorzugsweise ist der erste Längsrand auf beiden Seiten des bandförmigen Stromkollektors nicht beschichtet.

Erfindungsgemäß zeichnet sich die bandförmige Elektrode weiterhin durch die folgenden Merkmale aus:
c. Der zweite Längsrand ist als Stützrand ausgebildet und ist nicht mit dem Elektrodenmaterial beschichtet. Vorzugsweise ist der zweite Längsrand beidseitig nicht mit Elektrodenmaterial beschichtet ist.
d. Die Breite des Stützrandes beträgt maximal 99 %, bevorzugt maximal 90 %, besonders bevorzugt maximal 50 %, der Breite des Kontaktrandes.

Gemäß den vorgenannten Merkmalen a. bis d. weist die erfindungsgemäße bandförmige Elektrode zwei unbeschichtete Längsränder auf, wobei sich diese beiden freien Längsränder hinsichtlich ihrer Breite unterscheiden, was der Elektrode in Längsrichtung eine Asymmetrie verleiht.

Hierbei ist der breitere der unbeschichteten Längsränder als Kontaktrand ausgebildet. Dieser Kontaktrand ist in beispielsweise für die Kontaktierung der Elektrode an einen Stromableiter vorgesehen. Insbesondere kann der Kontaktrand für die Kontaktierung der Elektrode mit einer Kontaktplatte oder einem ähnlichen Kontaktelement, beispielsweise gemäß der oben genannten WO 2017/215900 A1, verwendet werden.

Der andere, schmalere freie Längsrand der erfindungsgemäßen Elektrode ist als Stützrand ausgebildet und wirkt dabei einer Verformung der bandförmigen Elektrode, die herkömmlicherweise beim Kalandrieren des Elektrodenmaterials, also beim Verdichten des Elektrodenmaterials, auftritt, entgegen. Allgemein ist die Kalandrierung für die Verbesserung der Adhäsion des Elektrodenmaterials auf dem Stromkollektor und damit für eine verbesserte mechanische Stabilität der Elektroden vorteilhaft. Gleichzeitig erhöht die Kalandrierung die Energiedichte des resultierenden elektrochemischen Energiespeicherelements, wie es oben bereits erläutert wurde. Die mit der Kalandrierung einhergehende ungleichmäßige Verformung der bandförmigen Elektrode wird bei der erfindungsgemäßen Elektrode vermieden bzw. verringert. Dies wird überraschend durch die Präsenz des Stützrands erreicht. Versuche der Erfinder haben gezeigt, dass bereits durch einen schmalen Stützrand in sehr effektiver Weise eine Verformung und ein Verziehen der bandförmigen Elektrode in Folge der Kalandrierung vermieden werden kann.

Während nach herkömmlichen Verfahren in vielen Fällen vorgesehen war, zur Herstellung von Elektroden, wie sie beispielsweise gemäß der WO 2017/215900 A1 zum Einsatz kommen, mit Elektrodenmaterial beschichtete Stromkollektoren mit lediglich einem unbeschichteten Längsrand einer Kalandrierung zu unterziehen, ist es gemäß der vorliegenden Erfindung vorgesehen, Stromkollektoren mit zwei unbeschichteten Längsrändern zu kalandrieren, wobei einer der Längsränder schmaler ist als der andere. Der Stützrand dient hierbei zur Stabilisierung der linearen Form der bandförmigen Elektrode, während der Kontaktrand zur elektrischen Kontaktierung der Elektrode innerhalb des herzustellenden Energiespeicherelements dient. Der Stützrand ist nicht zur elektrischen Kontaktierung der Elektrode vorgesehen.

Sowohl der erste Längsrand als auch der zweite Längsrand der Elektrode sind vorzugsweise beidseitig nicht mit Elektrodenmaterial beschichtet, also beidseitig frei von Elektrodenmaterial.

In bevorzugter Weise ist die Breite des Stützrandes und/oder die Breite des Kontaktrandes über ihre gesamte Länge konstant oder zumindest im Wesentlichen konstant.

In besonders bevorzugter Weise liegt die Elektrodenmaterialbeschichtung der erfindungsgemäßen bandförmigen Elektrode in verdichteter Form vor, wobei diese verdichtete Form des Elektrodenmaterials durch einen Kalandriervorgang, also eine Verdichtung unter Druck, erzeugt wurde. Der besondere Vorteil der Erfindung, nämlich die Vermeidung einer Verformung in Folge der Kalandrierung, kommt insbesondere bei bereits kalandrierten bandförmigen Elektroden zum Tragen. Andererseits umfasst die Erfindung auch bandförmige Elektroden gemäß der obigen Beschreibung, die (noch) nicht kalandriert sind. Bei diesen bandförmigen Elektroden zeigt sich der besondere Vorteil der Erfindung dann erst nach einer erfolgten Verdichtung des Elektrodenmaterials.

Gemäß dem vorgenannten Merkmal d. beträgt die Breite des Stützrandes maximal 99 %, bevorzugt maximal 90 %, besonders bevorzugt maximal 50 %, der Breite des Kontaktrandes. Der Stützrand ist damit schmaler als der Kontaktrand. Das ist auch zweckmäßig, weil so der Platzbedarf für den Stützrand gering gehalten werden kann. Seine Funktion erfüllt der Stützrand im Wesentlichen nur bei der Herstellung der Elektrode. In einer elektrochemischen Zelle stellt er lediglich Ballast dar.

Versuche der Erfinder haben gezeigt, dass auch ein Stützrand, der nur die Hälfte der Breite des Kontaktrandes oder weniger aufweist, den gewünschten Effekt zeigt und einer Verformung der bandförmigen Elektrode zuverlässig entgegenwirkt. Besonders bevorzugt beträgt daher die Breite des Stützrandes maximal 50 % der Breite des Kontaktrands.

In weiteren bevorzugten Ausgestaltungen der bandförmigen Elektrode zeichnet sich die Elektrode durch mindestens eines der folgenden zusätzlichen Merkmale aus:
a. Der Stützrand weist eine Breite in einem Bereich von 10 % bis 50 %, bevorzugt 10 % bis 40 %, besonders bevorzugt 10 % bis 30 %, der Breite des Kontaktrandes auf.
b. Der Stützrand weist eine Breite von maximal 45%, bevorzugt maximal 40%, weiter bevorzugt maximal 35%, weiter bevorzugt maximal 30%, besonders bevorzugt maximal 25%, der Breite des Kontaktrandes auf.
c. Der Stützrand weist eine Breite von 5 % bis 25 % der Breite des Kontaktrandes auf.
d. Der Stützrand weist eine Breite von 5 % bis 20 % der Breite des Kontaktrandes auf.

Versuche der Erfinder haben gezeigt, dass sogar eine Breite des Stützrandes in den angegebenen Bereichen ausreichend ist, um einer Verformung entgegenzuwirken. Selbstverständlich hängen die absoluten Werte für die Breite des Kontaktrandes und die Breite des Stützrandes von den jeweiligen Dimensionen der bandförmigen Elektrode und der herzustellenden Energiespeicherelemente ab.

Die gesamte Breite der Elektrodenbänder ist prinzipiell variabel und kann in Abhängigkeit von den Dimensionen des herzustellenden Energiespeicherelements angepasst werden. Dabei ist es im Allgemeinen vorgesehen, dass die jeweilige Breite des Elektrodenbandes über dessen gesamte Länge konstant ist. Insbesondere liegt die Breite der erfindungsgemäßen Elektrodenbänder in einem Bereich von bis zu 500 mm. Bevorzugt liegt die Breite der Elektrodenbänder in einem Bereich von 5 bis 300 mm. Besonders bevorzugt liegt die Breite der Elektrodenbänder in einem Bereich von 20 bis 200 mm.

In Abhängigkeit von der gesamten Breite des Elektrodenbandes können die Breite des Kontaktrandes und die Breite des Stützrandes angepasst werden. Der Breite des Kontaktrandes kann beispielsweise 1 - 30 %, bevorzugt 5 - 20 %, vorzugsweise 10 - 15 %, der Gesamtbreite der bandförmigen Elektrode betragen. Insbesondere liegt die Breite des Kontaktrands in einem Bereich von bis zu 50 mm, vorzugsweise in einem Bereich von 1 bis 30 mm.

Beispielsweise können insbesondere die folgenden Merkmale im Hinblick auf die Abmessungen bei dem Kontaktrand und dem Stützrand vorgesehen sein:
a. Der Kontaktrand weist eine Breite von bis zu 2 mm und der Stützrand eine Breite von bis zu 0,5 mm auf.
b. Der Kontaktrand weist eine Breite von bis zu 20 mm oder mehr und der Stützrand eine Breite von bis zu 5 mm auf.

In bevorzugten Ausführungsformen der Erfindung zeichnet sich die bandförmige Elektrode durch eines der folgenden zusätzlichen Merkmale aus:
a. Die Elektrode ist eine Kathode und der bandförmige Stromkollektor ist von einer Aluminiumfolie gebildet.
b. Die Elektrode ist eine Anode und der bandförmige Stromkollektor ist von einer Kupferfolie gebildet.

Die Ausgestaltung der erfindungsgemäßen Elektrode als Kathode mit einem bandförmigen Stromkollektor aus Aluminiumfolie gemäß dem vorgenannten Merkmal a. ist besonders bevorzugt, da insbesondere bei einer solchen Kathode bei herkömmlichen Elektroden eine besonders starke Verformung der bandförmigen Elektrode in Folge des Kalandrierprozesses festzustellen ist. Die Vorteile der Erfindung kommen daher insbesondere bei einer solchen Kathode besonders zum Tragen.

In anderen Ausführungsformen kann die Metallfolie des bandförmigen Stromkollektors auch auf der Basis einer Legierung gebildet sein, beispielsweise einer Aluminiumlegierung für die Kathode oder einer Kupferlegierung für die Anode. Für den Stromkollektor der Anode eignet sich beispielsweise auch Nickel oder eine Nickellegierung.

Als Elektrodenmaterial für die Beschichtung der bandförmigen Elektrode eignen sich prinzipiell alle bekannten Elektrodenmaterialien für verschiedene Arten von Energiespeicherelementen, die herkömmlicherweise für eine Beschichtung eines bandförmigen Stromkollektors eingesetzt werden. Für die Ausbildung einer negativen Elektrode können beispielsweise Partikel auf Kohlenstoffbasis, wie beispielsweise graphitischer Kohlenstoff, die Basis für das Elektrodenmaterial bilden. Als Basis für das Elektrodenmaterial einer positiven Elektrode können beispielsweise Lithiumnickeloxid oder Lithiumcobaltoxid oder Lithiummanganoxid oder Lithiumeisenphosphat oder Derivate hiervon eingesetzt werden. Diese Materialien eignen sich insbesondere für Elektroden, die zur Herstellung von Lithium-Ionen-Energiespeicherelementen vorgesehen sind.

Die Erfindung umfasst weiterhin ein Verfahren zur Herstellung der beschriebenen bandförmigen Elektrode. Dieses Verfahren umfasst zunächst die folgenden Verfahrensschritte:
a. Es wird ein bandförmiger Stromkollektor in ein- oder mehrfacher Breite der herzustellenden bandförmigen Elektrode bereitgestellt.
b. Der bandförmige Stromkollektor wird ein- oder beidseitig mit Elektrodenmaterial beschichtet, so dass pro Breite der herzustellenden Elektrode ein erster Längsrand des Stromkollektors und ein zweiter Längsrand des Stromkollektors frei von dem Elektrodenmaterial bleiben.
c. Der mit dem Elektrodenmaterial beschichtete Stromkollektor wird zur Verdichtung des Elektrodenmaterials einer Kalandrierung unterzogen.

Erfindungsgemäß wird die Beschichtung und/oder die weitere Verarbeitung zur Herstellung der Elektrode derart durchgeführt, dass die Breite des zweiten, nicht mit dem Elektrodenmaterial beschichteten Längsrandes der herzustellenden Elektrode maximal 99 %, bevorzugt maximal 90 %, der Breite des ersten, nicht mit dem Elektrodenmaterial beschichteten Längsrandes beträgt. Auf diese Weise wird eine bandförmige Elektrode hergestellt, bei der der breitere Längsrand den Kontaktrand der Elektrode bildet. Mittels dieses Kontaktrandes erfolgt die elektrische und gegebenenfalls auch die mechanische Kontaktierung und Befestigung der Elektrode in dem herzustellenden Energiespeicherelement. Der schmalere Längsrand der Elektrode dient nicht zur Kontaktierung, sondern bildet einen Stützrand für die Elektrode, um einer Verformung der bandförmigen Elektrode in Folge der Kalandrierung bzw. der Verdichtung des Elektrodenmaterials unter Druck entgegenzuwirken und so eine lineare Form der Elektrode zu stabilisieren.

Die Ausbildung der nicht mit Elektrodenmaterial beschichteten Längsränder der bandförmigen Elektrode kann auf unterschiedliche Weise erfolgen. Insbesondere können hierfür eine oder mehrere der folgenden Vorgehensweisen vorgesehen sein:
d. Das Elektrodenmaterial wird derart auf den Stromkollektor aufgebracht, dass die Breite des zweiten, nicht mit dem Elektrodenmaterial beschichteten Längsrands maximal 90 %, vorzugsweise maximal 50 %, der Breite des nicht mit dem Elektrodenmaterial beschichteten ersten Längsrands beträgt,
   und/oder
e. der erste und/oder der zweite Längsrand wird nach dem Beschichten mit dem Elektrodenmaterial derart beschnitten, dass die Breite des zweiten, nicht mit dem Elektrodenmaterial beschichteten Längsrands maximal 90 %, vorzugsweise maximal 50 %, der Breite des nicht mit dem Elektrodenmaterial beschichteten ersten Längsrands beträgt,
   und/oder
f. nach dem Beschichten wird Elektrodenmaterial bereichsweise von dem Stromkollektor entfernt, so dass die Breite des zweiten, nicht mit dem Elektrodenmaterial beschichteten Längsrands maximal 90 %, vorzugsweise maximal 50 %, der Breite des nicht mit dem Elektrodenmaterial beschichteten ersten Längsrands beträgt.

In besonders bevorzugten Ausführungsformen sind die folgenden zusätzlichen Merkmale bei dem erfindungsgemäßen Verfahren vorgesehen:
a. Der bandförmige Stromkollektor wird in mehrfacher Breite der herzustellenden bandförmigen Elektrode bereitgestellt.
b. Die Beschichtung mit dem Elektrodenmaterial erfolgt unter Auftrag von zwei oder mehr Beschichtungsstreifen aus dem Elektrodenmaterial auf den Stromkollektor sowie unter Erhalt von streifenförmigen Freiräumen zwischen zwei Beschichtungsstreifen.
c. Der bandförmige Stromkollektor wird in Längsrichtung des bandförmigen Stromkollektors innerhalb der Freiräume zwischen den Beschichtungsstreifen durchtrennt.

Diese Vorgehensweise gemäß den vorgenannten Merkmalen a. bis c. ist in besonderer Weise für eine schnelle und kostengünstige Produktion einer Mehrzahl von bandförmigen Elektroden geeignet. Insbesondere eignet sich diese Vorgehensweise für eine Massenproduktion.

In bevorzugten Ausführungsformen erfolgt das Durchtrennen, vorzugsweise das Schneiden, gemäß dem Merkmal c. nicht entlang der Mittellinie des Freiraums zwischen den Beschichtungsstreifen, sondern derart, dass unmittelbar eine bandförmige Elektrode resultiert, die unterschiedlich breite Freiränder an ihren beiden Längsrändern aufweist.

Das Durchtrennen des Stromkollektors gemäß dem vorgenannten Verfahrensschritt c. kann beispielsweise mittels eines Lasers erfolgen.

Prinzipiell kann die Verdichtung des Elektrodenmaterials unter Druck, also die Kalandrierung, vor oder nach dem Durchtrennen bzw. dem Vereinzeln der bandförmigen Elektroden gemäß dem vorgenannten Verfahrensschritt c. erfolgen. In besonders bevorzugter Weise erfolgt die Kalandrierung des beschichteten Stromkollektors jedoch vor dem Durchtrennen des bandförmigen Stromkollektors, da die Beschichtung durch das Kalandrieren im Hinblick auf die nachfolgende weitere Verarbeitung und insbesondere im Hinblick auf das Schneiden mechanisch stabilisiert und unempfindlich gemacht wird. In dieser Ausführungsform wird der mit mehreren Streifen beschichtete Stromkollektor während der Kalandrierung durch die zwischen den einzelnen Streifen liegenden Freiräume in Form gehalten. Nach dem Durchtrennen des Stromkollektors wird die Form der vereinzelten bandförmigen Elektroden durch die jeweiligen Stützränder aufrechterhalten und ein nachträgliches Verziehen der Elektroden wird vermieden.

Prinzipiell kann der Stromkollektor jedoch auch vor der Kalandrierung durchtrennt werden, da der vorgesehene Stützrand die Form der Elektrode während der nachfolgenden Kalandrierung stabilisiert, auch wenn sie bereits in vereinzelter Form vorliegt.

Die Erfindung umfasst weiterhin ein elektrochemisches Energiespeicherelement, das mindestens eine bandförmige Elektrode gemäß der obigen Beschreibung umfasst. Bei diesem Energiespeicherelement kann es sich prinzipiell um alle denkbaren Ausbildungen von Energiespeicherelementen handeln, die unter Verwendung einer bandförmigen Elektrode hergestellt werden und die dem Fachmann geläufig sind. Insbesondere sind hiervon Energiespeicherelemente mit mindestens einem der folgenden zusätzlichen Merkmale umfasst:
a. Die Elektroden des elektrochemischen Energiespeicherelements liegen innerhalb des Energiespeicherelements in gewickelter Form vor.
b. Die Elektroden des elektrochemischen Energiespeicherelements liegen innerhalb des Energiespeicherelements in gestapelter Form vor.
c. Das Energiespeicherelement verfügt über mindestens einen Stromableiter, der durch Verschweißung unmittelbar an den Kontaktrand der bandförmigen Elektrode gekoppelt ist.

In bevorzugter Weise sind die vorgenannten Merkmale a. und c. oder alternativ b. und c. in Kombination miteinander realisiert.

In besonderer bevorzugter Weise eignen sich die erfindungsgemäßen bandförmigen Elektroden für eine Weiterverarbeitung in gewickelter Form, beispielsweise für die Herstellung von Knopfzellen oder Rundzellen, z.B. im Format 21700. Die erfindungsgemäß erreichte Stabilisierung der linearen Form der bandförmigen Elektrode erleichtert erheblich den Wickelprozess im Vergleich zur Verarbeitung von herkömmlich hergestellten bandförmigen Elektroden, bei denen oftmals die auftretende Verformung die Verarbeitung erschwert.

Vorteile ergeben sich auch für die Herstellung von Energiespeicherelementen, bei denen die Elektroden in gestapelter Form vorliegen. Auch hier erleichtert die erfindungsgemäß erreichte Stabilisierung der Linearität der bandförmigen Elektroden die Verarbeitung, beispielsweise beim Ausstanzen von Stapelzellen aus aufgerollten Elektrodenbändern.

In besonderer Weise eignen sich die erfindungsgemäß stabilisierten Elektrodenbänder für die Herstellung der eingangs beschriebenen Rundzellen im Kontaktplattendesign, wobei ein plattenförmiges Kontaktelement als Stromableiter gemäß dem vorgenannten Merkmal c. durch Verschweißung unmittelbar an den Kontaktrand der Elektrode gekoppelt wird. Bezüglich weiterer Einzelheiten einer solchen Ausbildung von zylindrischen Rundzellen wird beispielhaft auf die WO 2017/215900 A1 verwiesen.

In besonders bevorzugten Ausführungsformen handelt es sich bei dem erfindungsgemäß herstellbaren elektrochemischen Energiespeicherelement um ein Lithium-Ionen-Energiespeicherelement. In anderen Ausführungsformen kann es sich beispielsweise um ein Natrium-Ionen-Energiespeicherelement oder um ein Element auf einer anderen elektrochemischen Basis handeln.

Ein besonderer Vorteil von Lithium-Ionen-Energiespeicherelementen liegt darin, dass diese Elemente hohe Ströme bereitstellen können und sich durch eine vergleichsweise hohe Energiedichte auszeichnen. Sie basieren auf dem Einsatz von Lithium, welches in Form von Ionen zwischen den Elektroden des Elements hin und her wandern kann. Die negative Elektrode und die positive Elektrode eines Lithium-Ionen-Energiespeicherelements werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Elemente kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumnickeloxid (LiNiOz), Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Der bandförmige Stromkollektor des erfindungsgemäßen Energiespeicherelements stellt eine elektrochemisch inaktive Komponente des Elements dar. Insbesondere handelt es sich hierbei um eine metallische Folie, die als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Energiespeicherelemente meist Lösungen von Lithiumsalzen wie Lithiumhexafluorophosphat (LiPF₆) in organischen Lösungsmitteln (z. B. Ether und Ester der Kohlensäure).

Die Kompositelektroden werden im Allgemeinen bei der Herstellung eines Lithium-Ionen-Elements mit einem oder mehreren Separatoren zu einem Elektroden-Separator-Verbund kombiniert. Hierbei werden die Elektroden und Separatoren oft, allerdings keinesfalls zwingend, unter Druck, gegebenenfalls auch durch Lamination oder durch Verklebung, miteinander verbunden. Die grundsätzliche Funktionsfähigkeit des Energiespeicherelements kann dann durch Tränkung des Verbunds mit dem Elektrolyten hergestellt werden.

In vielen Ausführungsformen von Lithium-Ionen-Energiespeicherelementen wird der Elektroden-Separator-Verbund in Form eines Wickels gebildet oder zu einem Wickel verarbeitet. Im ersten Fall werden beispielsweise eine bandförmige positive Elektrode und eine bandförmige negative Elektrode sowie mindestens ein bandförmiger Separator separat einer Wickelmaschine zugeführt und in dieser zu einem Wickel mit der Sequenz positive Elektrode / Separator / negative Elektrode spiralförmig aufgewickelt. Im zweiten Fall werden eine bandförmige positive Elektrode und eine bandförmige negative Elektrode sowie mindestens ein bandförmiger Separator zunächst zu einem Elektroden-Separator-Verbund kombiniert, beispielsweise unter Anwendung des erwähnten Drucks. In einem weiteren Schritt wird dann der Verbund aufgewickelt, bevor dieser Elektroden-Separator-Verbund in ein Gehäuse eingesetzt wird.

Elektrodenwickel lassen sich in sehr hoher Geschwindigkeit und damit zu vergleichsweise niedrigen Kosten produzieren. Die Wickelzellentechnologie eignet sich zur Herstellung sowohl von prismatischen Zellen als auch von Rundzellen.

Die Erfindung umfasst schließlich ein Verfahren zur Herstellung eines elektrochemischen Energiespeicherelements, wobei hierfür mindestens eine bandförmige Elektrode gemäß der obigen Beschreibung verwendet wird.

Prinzipiell erfolgt hierbei die Herstellung eines elektrochemischen Energiespeicherelements in einer dem Fachmann bekannten Weise, wobei im Unterschied zu herkömmlichen Verfahren eine erfindungsgemäße bandförmige Elektrode oder mehrere erfindungsgemäße bandförmige Elektroden eingesetzt werden. Insbesondere zeichnet sich dieses Verfahren durch mindestens einen der folgenden Verfahrensschritte aus:
a. Die mindestens eine bandförmige Elektrode wird zu einem wickelförmigen Elektroden-Separator-Verbund oder zu einem Elektroden-Separator-Stapel verarbeitet.
b. Die mindestens eine bandförmige Elektrode wird mit Elementen des herzustellenden Energiespeicherelements, insbesondere mit Gehäuseelementen des Energiespeicherelements, elektrisch kontaktiert, wobei die elektrische Kontaktierung der mindestens einen bandförmigen Elektrode über den Kontaktrand der bandförmigen Elektrode erfolgt.

Gegenüber herkömmlichen Herstellungsverfahren hat dieses Verfahren den besonderen Vorteil, dass die erfindungsgemäß erreichte Stabilisierung der Linearität der bandförmigen Elektroden die weitere Verarbeitung der Elektroden erheblich erleichtert, beispielsweise im Hinblick auf einen Wickelprozess oder auf das weitere Schneiden und Verarbeiten der Elektroden.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander realisiert sein.

In den Figuren zeigen:
- Fig. 1: schematische Darstellung eines mehrspurigen Schichtauftrags auf einen bandförmigen Stromkollektor und Schnitt zur Herstellung von bandförmigen Elektroden mit einem Längsrand (Kontaktrand) nach dem Stand der Technik;
- Fig. 2: schematische Darstellung eines mehrspurigen Schichtauftrags auf einen bandförmigen Stromkollektor und Schnitt zur Herstellung von bandförmigen Elektroden mit zwei Freirändern (Kontaktrand und Stützrand) gemäß der Erfindung;
- Fig. 3: fotografische Darstellung einer erfindungsgemäßen bandförmigen Elektrode; und
- Fig. 4: ein erfindungsgemäßes Energiespeicherelement in Form einer zylindrischen Rundzelle.

### BESCHREIBUNG VON AUSFÜHRUNGSBEISPIELEN

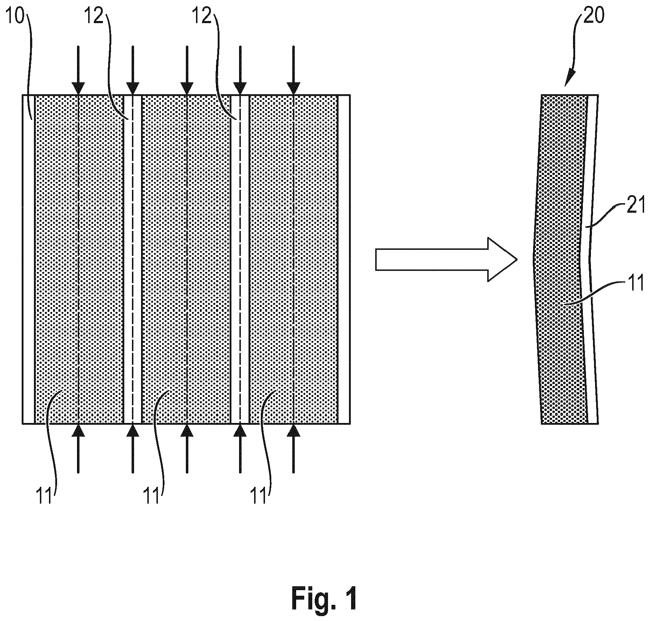

**Fig. 1** illustriert in schematischer Weise und ausschnittsweise die Herstellung von bandförmigen Elektroden gemäß einem herkömmlichen Verfahren (Stand der Technik). Wie auf der linken Seite der Darstellung gezeigt, wird auf einen ausschnittsweise gezeigten bandförmigen Stromkollektor 10, der die mehrfache Breite der herzustellenden bandförmigen Elektroden aufweist (sechsfache Breite), das Elektrodenmaterial in drei parallel verlaufenden Streifen 11 aufgebracht. Zwischen den einzelnen Streifen 11 finden sich jeweils Zwischenräume (Freiräume) 12, die nicht mit dem Elektrodenmaterial beschichtet sind. Zur Erzeugung der einzelnen bandförmigen Elektroden wird jeweils in Längsrichtung des bandförmigen Stromkollektors 10 in der Mitte der Beschichtungsstreifen 11 und in der Mitte der Freiräume 12 entlang der gestrichelten Linien geschnitten, angedeutet durch die Pfeile von oben und unten. Auf diese Weise entstehen die vereinzelten bandförmigen Elektroden 20, wie es auf der rechten Seite der Abbildung dargestellt ist. Der eine Längsrand dieser bandförmigen Elektrode 20 ist nicht mit dem Elektrodenmaterial 11 beschichtet während der andere beschichtet ist. Dieser Längsrand 21 ist im Allgemeinen zur Kontaktierung der Elektrode innerhalb eines herzustellenden Energiespeicherelements vorgesehen.

Das Elektrodenmaterial der dargestellten Elektrode 21 kann im Rahmen eines Kalandrierprozesses verdichtet werden. Hierbei tritt das Problem auf, dass durch die ungleichförmige Verformung des Stromkollektors bei der Kalandrierung eine sichelartige Verformung und ein Verziehen der resultierenden Elektrode 20 auftreten kann, die die weitere Verarbeitung der Elektrode 20 erschwert. Die Sichelform der resultierenden Elektrode 20 zeigt eine deutliche Abweichung von einem streng linearen Verlauf.

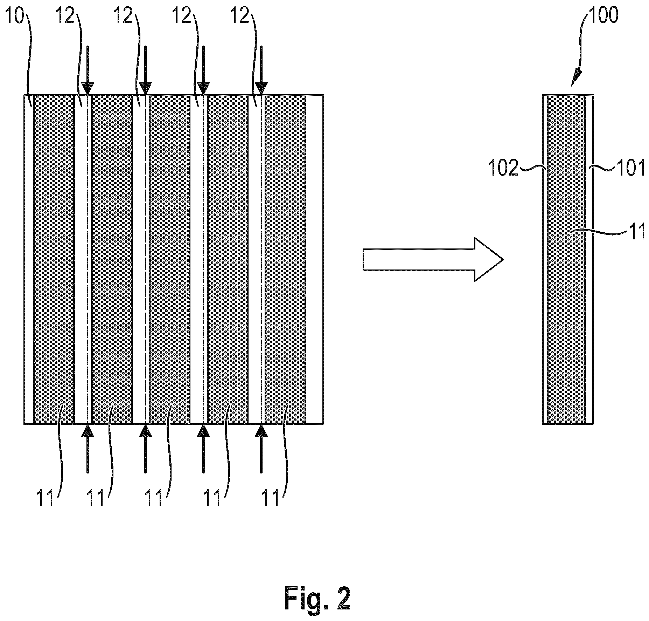

**Fig. 2** illustriert die erfindungsgemäße Lösung dieses Problems. Auch hier wird auf den bandförmigen Stromkollektor 10, der die mehrfache Breite der herzustellenden Elektroden aufweist, das Elektrodenmaterial in Form von Streifen 11 und dazwischenliegenden Freiräumen 12 aufgetragen. Allerdings erfolgt der Streifenauftrag hier in der Breite der Beschichtung der herzustellenden Elektrode, wohingegen bei der anhand der Fig. 1 illustrierten Vorgehensweise aus dem Stand der Technik der Streifenauftrag in doppelter Breite erfolgt. Die Schnittlinien zur Erzeugung der vereinzelten Elektroden 100 werden bei der erfindungsgemäßen Vorgehensweise asymmetrisch und damit nicht entlang der Mittellinien innerhalb der Freiräume 12 gesetzt, hier angedeutet durch Pfeile von oben und unten. Durch dieses Schnittmuster werden bandförmige Elektroden 100 erzeugt, die zwei von Elektrodenmaterial freie Längsränder aufweisen. Der erste, breitere Längsrand 101 dient als Kontaktrand für die elektrische und/oder mechanische Kontaktierung der Elektrode 100 in einem herzustellenden Energiespeicherelement. Der zweite, schmalere Längsrand 102 dient als Stützrand und bewirkt, dass es nicht zu einer ungleichmäßigen Verformung der Elektrode 100 während einer Kalandrierung kommt.

Die Kalandrierung hat im Allgemeinen zur Folge, dass der Stromkollektor, also beispielsweise die Kollektorfolie, gedehnt wird. Dies geschieht jedoch nur in dem beschichteten Bereich der Folie, sodass es herkömmlicherweise zu einer ungleichmäßigen Verformung der Elektrode kommt. Der Stützrand 102 der erfindungsgemäßen Elektrode 100 bewirkt eine mechanische Stabilisierung der bandförmigen Elektrode und verhindert eine Kurvenbildung bzw. sichelförmige Verformung der bandförmigen Elektrode. Der Stützrand 102 erfüllt damit eine Stützfunktion bzw. genauer eine Zugfunktion, so dass die lineare Form der bandförmigen Elektrode 100 erhalten bleibt und somit die Elektrode in allen nachfolgenden Verarbeitungsschritten mit einer deutlich besseren Linearität weiterverarbeitet werden kann. Dies spielt insbesondere beim Wickeln von Elektrodenwickeln eine große Rolle. Aber auch bei der Verarbeitung von aufgerollten Elektrodenbändern, die beispielsweise zu Stapelzellen verarbeitet werden und in Automaten ausgestanzt werden und dann weiterverarbeitet werden sollen, ist dies sehr vorteilhaft.

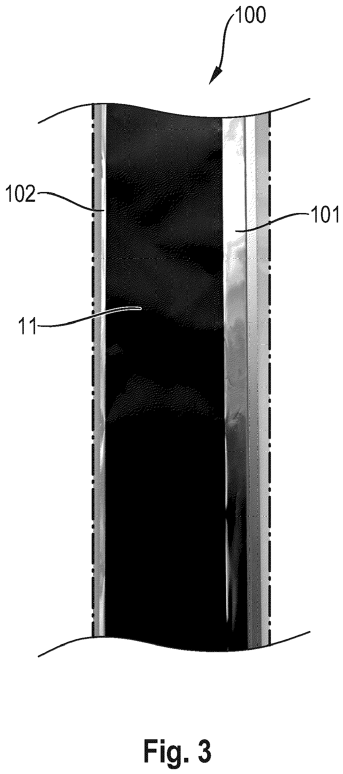

**Fig. 3** zeigt eine fotografische Abbildung eines Abschnitts einer erfindungsgemäßen bandförmigen Elektrode 100. Der bandförmige Stromkollektor, der von einer Metallfolie (Aluminium) gebildet ist, ist mit einer Beschichtung 11 aus Elektrodenmaterial versehen. Diese Beschichtung ist beidseitig. Beide Längsränder der bandförmigen Elektrode 100 sind frei von dem Elektrodenmaterial, wobei in dieser Darstellung der rechte Längsrand 101 breiter als der linke Längsrand 102 ist. Der rechte Längsrand 101 dient als Kontaktrand und ist zur elektrischen und gegebenenfalls auch mechanischen Kontaktierung der verarbeiteten Elektrode in einem herzustellenden Energiespeicherelement vorgesehen. Der linke, schmalere Längsrand 102 bildet einen Stützrand und sorgt dafür, dass sich die bandförmige Elektrode 100 durch den für die Herstellung der Elektrode vorgesehenen Kalandrierprozess nicht ungleichmäßig verformt und verzieht. Wie diese fotografische Darstellung zeigt, ist die Linearität der bandförmigen Elektrode 100 vollständig erhalten und es ist keine sichelförmige oder anderweitige Verformung der Elektrode 100 festzustellen.

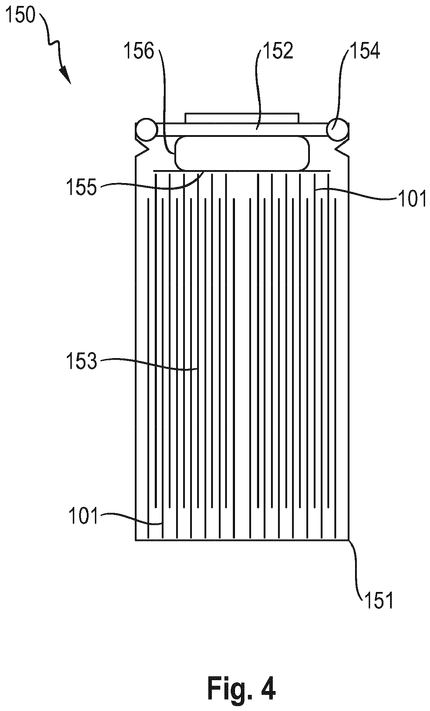

In **Fig. 4** ist ein erfindungsgemäßes Energiespeicherelement 150 in Form einer zylindrischen Rundzelle dargestellt. Das Energiespeicherelement 150 umfasst ein metallisches Gehäuse mit einem Gehäusebecher 151 und einem Gehäusedeckel 152. In dem Gehäuse ist ein gewickelter Elektroden-Separator-Verbund 153 in zylindrischer Form eingeschlossen. Das Gehäuse ist insgesamt zylindrisch ausgebildet, wobei der Gehäusebecher 151 einen runden Boden, einen hohlzylindrischen Mantel und eine dem Boden gegenüberliegende runde Öffnung aufweist. Der Gehäusedeckel 152 dient zum Verschließen der runden Öffnung des Gehäusebechers 151. Der Gehäusedeckel 152 ist gegenüber dem Gehäusebecher 151 im Bereich der runden Öffnung mittels einer umlaufenden Dichtung 154 abgedichtet und elektrisch isoliert. Das Gehäuse ist beispielsweise durch Bördelung verschlossen.

Der Elektroden-Separator-Verbund 153 liegt in Form eines zylindrischen Wickels vor, der aus einer erfindungsgemäßen bandförmigen positiven Elektrode und einer erfindungsgemäßen bandförmige negativen Elektrode sowie mindestens einem, zwischen den Elektroden angeordneten bandförmigen Separator gebildet ist. Die bandförmigen Elektroden weisen jeweils einen Kontaktrand 101 auf, der nicht mit dem Elektrodenmaterial beschichtet ist und der zur elektrischen Kontaktierung mit den entsprechenden Elementen des Gehäuses genutzt wird. Auf dem jeweils gegenüberliegenden Längsrand der bandförmigen Elektroden ist erfindungsgemäß zur Stabilisierung der linearen Form der Elektroden jeweils ein, hier nicht näher dargestellter, Stützrand vorgesehen, der ebenfalls nicht mit Elektrodenmaterial beschichtet ist und der etwas schmaler als der Kontaktrand ist.

Die Wicklung der bandförmigen Elektroden zur Herstellung des Elektroden-Separator-Verbunds 153 erfolgt derart, dass die bandförmigen Elektroden in dem Elektroden-Separator-Verbund 153 versetzt zueinander angeordnet sind, sodass der Kontaktrand 101 der einen Elektrode auf einer der Stirnseiten hervorsteht, und der Kontaktrand 101 der anderen Elektrode auf der gegenüberliegenden Stirnseite des Wickels hervorsteht, wie es in der Fig. 4 schematisch angedeutet ist.

Der Kontaktrand 101 im unteren Teil dieser Darstellung stellt beispielsweise den Kontaktrand der negativen Elektrode dar und wird demgemäß von dem unbeschichteten Anodenstromkollektor gebildet. Auf der in dieser Darstellung oberen Seite des Elektroden-Separator-Verbunds 153 tritt entsprechend der Kontaktrand 101 der positiven Elektrode hervor, der von dem unbeschichteten Kathodenstromkollektor gebildet wird.

Der unten überstehende Kontaktrand 101 der negativen Elektrode steht über seine gesamte Länge in unmittelbarem Kontakt mit dem Boden des Gehäusebechers 151 und ist mit diesem mindestens über mehrere Abschnitte, bevorzugt über seine gesamte Länge, durch Verschweißung verbunden. Der oben überstehende Kontaktrand 101 der positiven Elektrode steht über seine gesamte Länge in unmittelbarem Kontakt mit einer metallischen Kontaktplatte (Kontaktelement) 155 und ist mit dieser mindestens über mehrere Abschnitte, bevorzugt über seine gesamte Länge, durch Verschweißung verbunden. Die Kontaktplatte 155 ist wiederum über einen elektrischen Leiter 156 elektrisch mit dem Gehäusedeckel 152 verbunden. Bevorzugt besteht zwischen dem Leiter 156 und der Kontaktplatte 155 einerseits und dem elektrischen Leiter 156 und dem Gehäusedeckel 152 andererseits jeweils eine Schweißverbindung. Der besseren Übersicht wegen sind die bandförmigen Elektroden nur schematisch und ohne weitere detaillierte Komponenten des Elektroden-Separator-Verbunds 153 (insbesondere Separatoren und Elektrodenmaterialien) dargestellt. In dieser beispielhaften Ausführungsform bildet der Gehäusebecher 151 den Minuspol und der Gehäusedeckel 152 den Pluspol des Energiespeicherelements 150.

Im Falle prismatischer Ausführungsformen könnte ein Schnitt durch ein Energiespeicherelement im Prinzip gleich aussehen. Der Gehäusebecher 151 hätte in diesem Falle einen rechteckigen Boden, eine rechteckige Seitenwand und einen rechteckigen Querschnitt sowie eine rechteckige Öffnung. Der Gehäusedeckel 152 wäre zum Verschließen der rechteckigen Öffnung ausgebildet. Statt eines wickelförmigen Elektroden-Separator-Verbunds könnte bei einer prismatischen Zelle das Bezugszeichen 153 einen Stapel aus mehreren identischen Elektroden-Separator-Verbünden mit jeweils freiliegenden Kontakträndern der Elektroden bezeichnen.

## Patentansprüche

1. Bandförmige Elektrode (100) mit einem bandförmigen Stromkollektor (10) und einer ein- oder beidseitigen Beschichtung (11) mit Elektrodenmaterial, wobei
a. der bandförmige Stromkollektor (10) einen ersten und einen zweiten Längsrand umfasst,
b. der erste Längsrand als Kontaktrand (101) ausgebildet ist, der
- zur elektrischen Kontaktierung der Elektrode dient und
- der nicht mit dem Elektrodenmaterial beschichtet ist,
**dadurch gekennzeichnet, dass**
c. der zweite Längsrand als Stützrand (102) ausgebildet ist, der nicht mit dem Elektrodenmaterial beschichtet ist und
d. die Breite des Stützrandes (102) maximal 99 %, vorzugsweise maximal 50 %, der Breite des Kontaktrandes (101) beträgt.

2. Bandförmige Elektrode nach Anspruch 1 mit mindestens einem der folgenden zusätzlichen Merkmale:
a. Der Stützrand (102) weist eine Breite in einem Bereich von 10 % bis 50 %, bevorzugt 10 % bis 40 %, besonders bevorzugt 10 % bis 30 %, der Breite des Kontaktrandes (101) auf;
b. der Stützrand (102) weist eine Breite von maximal 45 %, bevorzugt maximal 40 %, weiter bevorzugt maximal 35 %, weiter bevorzugt maximal 30 %, besonders bevorzugt maximal 25 %, der Breite des Kontaktrandes (101) auf;
c. der Stützrand (102) weist eine Breite von 10 % bis 25 % der Breite des Kontaktrandes (101) auf;
d. der Stützrand (102) weist eine Breite von 10 % bis 20 % der Breite des Kontaktrandes (101) auf.

3. Bandförmige Elektrode nach Anspruch 1 oder Anspruch 2 mit einem der folgenden zusätzlichen Merkmale:
a. Der Kontaktrand (101) weist eine Breite von bis zu 2 mm und der Stützrand (102) eine Breite von bis zu 0,5 mm auf;
b. der Kontaktrand (101) weist eine Breite von bis zu 20 mm oder mehr und der Stützrand (102) eine Breite von bis zu 5 mm auf.

4. Bandförmige Elektrode nach einem der vorhergehenden Ansprüche mit einem der folgenden zusätzlichen Merkmale:
a. Die Elektrode (100) ist eine Kathode und der bandförmige Stromkollektor (10) ist von einer Aluminiumfolie gebildet;
b. die Elektrode (100) ist eine Anode und der bandförmige Stromkollektor (10) ist von einer Kupferfolie gebildet.

5. Verfahren zur Herstellung einer bandförmigen Elektrode (100) nach einem der Ansprüche 1 bis 4, umfassend die folgenden Verfahrensschritte:
a. Es wird ein bandförmiger Stromkollektor (10) in ein- oder mehrfacher Breite der herzustellenden bandförmigen Elektrode bereitgestellt,
b. der bandförmige Stromkollektor (10) wird ein- oder beidseitig mit Elektrodenmaterial beschichtet, so dass pro Breite der herzustellenden Elektrode ein erster Längsrand des Stromkollektors und ein zweiter Längsrand des Stromkollektors frei von dem Elektrodenmaterial bleiben, und
c. der mit dem Elektrodenmaterial beschichtete Stromkollektor wird zur Verdichtung des Elektrodenmaterials einer Kalandrierung unterzogen,
**dadurch gekennzeichnet, dass**
d. das Elektrodenmaterial derart auf den Stromkollektor aufgebracht wird, dass die Breite des zweiten, nicht mit dem Elektrodenmaterial beschichteten Längsrands maximal 90 %, vorzugsweise maximal 50 %, der Breite des nicht mit dem Elektrodenmaterial beschichteten ersten Längsrands beträgt,
und/oder
e. der erste und/oder der zweite Längsrand nach dem Beschichten mit dem Elektrodenmaterial derart beschnitten wird, dass die Breite des zweiten, nicht mit dem Elektrodenmaterial beschichteten Längsrands maximal 90 %, vorzugsweise maximal 50 %, der Breite des nicht mit dem Elektrodenmaterial beschichteten ersten Längsrands beträgt,
und/oder
f. nach dem Beschichten Elektrodenmaterial bereichsweise von dem Stromkollektor entfernt wird, so dass die Breite des zweiten, nicht mit dem Elektrodenmaterial beschichteten Längsrands maximal 90 %, vorzugsweise maximal 50 %, der Breite des nicht mit dem Elektrodenmaterial beschichteten ersten Längsrands beträgt.

6. Verfahren nach Anspruch 5 mit den folgenden zusätzlichen Merkmalen:
a. Der bandförmige Stromkollektor (10) wird in mehrfacher Breite der herzustellenden bandförmigen Elektrode (100) bereitgestellt;
b. die Beschichtung mit dem Elektrodenmaterial erfolgt unter Auftrag von zwei oder mehr Beschichtungsstreifen (11) aus dem Elektrodenmaterial auf den Stromkollektor sowie unter Erhalt von streifenförmigen Freiräumen (12) zwischen zwei Besch ichtu ngsstreifen;
c. der bandförmige Stromkollektor (10) wird in Längsrichtung des bandförmigen Stromkollektors innerhalb der Freiräume (12) zwischen den Beschichtungsstreifen (11) durchtrennt.

7. Verfahren nach Anspruch 6 mit dem folgenden zusätzlichen Merkmal:
a. Die Kalandrierung des beschichteten Stromkollektors erfolgt vor dem Durchtrennen des bandförmigen Stromkollektors.

8. Elektrochemisches Energiespeicherelement (150), **dadurch gekennzeichnet, dass** das elektrochemische Energiespeicherelement mindestens eine bandförmige Elektrode (100) gemäß einem der Ansprüche 1 bis 4 umfasst.

9. Elektrochemisches Energiespeicherelement nach Anspruch 8 mit mindestens einem der folgenden zusätzlichen Merkmale:
a. Die Elektroden des elektrochemischen Energiespeicherelements liegen innerhalb des Energiespeicherelements in gewickelter Form vor;
b. die Elektroden des elektrochemischen Energiespeicherelements liegen innerhalb des Energiespeicherelements in gestapelter Form vor;
c. das Energiespeicherelement verfügt über mindestens einen Stromableiter, der durch Verschweißung unmittelbar an den Kontaktrand (101) der bandförmigen Elektrode gekoppelt ist.

10. Elektrochemisches Energiespeicherelement nach Anspruch 8 oder Anspruch 9 mit dem folgenden zusätzlichen Merkmal:
a. Das elektrochemische Energiespeicherelement ist ein Lithium-Ionen-Energiespeicherelement oder ein Natrium-Ionen-Energiespeicherelement.

11. Verfahren zur Herstellung eines elektrochemisches Energiespeicherelements (150), **dadurch gekennzeichnet, dass** mindestens eine bandförmige Elektrode (100) nach einem der Ansprüche 1 bis 4 verwendet wird.

12. Verfahren nach Anspruch 11 mit mindestens einem der folgenden zusätzlichen Merkmale:
a. Die mindestens eine bandförmige Elektrode (100) wird zu einem wickelförmigen Elektroden-Separator-Verbund (153) oder zu einem Elektroden-Separator-Stapel verarbeitet;
b. die mindestens eine bandförmige Elektrode (100) wird mit Elementen des herzustellenden Energiespeicherelements, insbesondere mit Gehäuseelementen des Energiespeicherelements, elektrisch kontaktiert, wobei die elektrische Kontaktierung der mindestens einen bandförmigen Elektrode über den Kontaktrand (101) der bandförmigen Elektrode erfolgt.
